# FASCICULE DE BREVET EUROPEEN

(11) **EP 0 734 338 B1**
(45) Date de publication et mention de la délivrance du brevet: **14.04.1999**
(21) Numéro de dépôt: 94931089.0
(22) Date de dépôt: 20.10.1994
(51) Int. Cl.: B62H 5/00, G01M 17/007

(54) **FIXATION DE L'UNE DES ROUES D'UN MOTOCYCLE SUR SOCLE ET BANC D'ESSAI A ROULEAU ASSOCIE**
EINRICHTUNG ZUR BEFESTIGUNG EINES RADES EINES MOTORRADES AM STÄNDER UND LEISTUNGSPRÜFSTAND DAFÜR
MOUNTING OF ONE WHEEL OF A MOTORCYCLE ON A STAND AND TEST STAND THEREFOR PROVIDED WITH ROLLER

(30) Priorité: 20.10.1993 FR 9313228
(43) Date de publication de la demande: 02.10.1996
(73) Titulaire: Fuchs, Daniel, F-34970 Lattes (FR)
(72) Inventeur: Fuchs, Daniel, F-34970 Lattes (FR)
(74) Mandataire: Ravina, Bernard
(86) Numéro de dépôt international: FR9401223
(87) Numéro de publication internationale: WO9511154

(56) Documents cités:
- EP-A- 0 111 352
- DE-A- 3 818 291
- DE-A- 3 941 058
- DE-U- 8 801 618
- US-A- 5 010 763

## Description

La présente invention concerne un dispositif de fixation d'une moto sur un socle par l'intermédiaire d'une de ses roues. Ce socle peut être un banc d'essais, une table élévatrice ou tout autre appareil destiné à recevoir une moto.

La présente invention a également pour objet un banc d'essais à rouleau équipé d'un tel dispositif.

Actuellement, il existe deux types de dispositifs de fixation d'une moto sur un socle.
Le premier consiste à pincer latéralement le pneu de la roue avant entre une surface verticale fixe et une surface verticale mobile à mouvement horizontal, parallèle à la surface fixe. La surface mobile vient plaquer le pneu contre la surface fixe et la partie de la circonférence du pneu enserrée entre ces deux surfaces est un arc de 120 degrés environs, situé à l'avant bas du pneu. Vues de côté, ces surfaces ont une forme en L vertical, leur plan étant perpendiculaire à l'axe de la roue avant. L'avant du pneu prend appui sur une surface verticale, parallèle à l'axe de la roue et perpendiculaire aux plans des surfaces en L, le bas du pneu reposant sur la surface plane du socle. Le déplacement de la surface mobile est assuré par un vérin pneumatique ou hydraulique.

Un tel dispositif présente deux inconvénients. Le premier est qu'il n'assure pas à la moto un positionnement latéral identique quel que soit le type de pneu équipant la roue avant. En effet, l'une des surfaces de pincement étant fixe et l'autre mobile, ces surfaces, une fois serrées sur le pneu, voient l'axe de symétrie entre elles, donc l'axe de la moto, avoir une position latérale variable en fonction de l'espacement entre les surfaces, espacement fonction de la largeur du pneu pincé entre elles ce qui interdit notamment le contrôle de la géométrie du châssis par rapport a un ou des repère(s) fixe(s) du banc. Le deuxième inconvénient vient du fait que, dans le cas où ce dispositif sort seul à maintenir la moto sur un banc de puissance à rouleau, le recul de la moto, sous l'effet de la composante tangentielle de l'effort du rouleau sur le pneu, générée par le freinage du rouleau du banc par le frein arrière de la moto, n'est contrarié que par l'adhérence des flancs du pneu sur le L. En effet, la branche verticale du L ne bloque la moto que vers l'avant, sons normal de l'effort lorsque la moto est en essai de puissance. Seules des sangles peuvent opposer un obstacle physique à un effort de recul de la moto.

Le deuxième dispositif connu est constitué de deux rails de section droite en V formant un L vue de côté. Un de ces deux rails est disposé verticalement et l'autre horizontalement au niveau du sol. L'ouverture du rail vertical est dirigée vers l'arrière, et l'ouverture du rail horizontal inférieur est dirigée vers le haut. Lors de la mise en place de la moto, la roue avant de cette dernière roule sur l'intrados du rail horizontal et vient buter par l'avant contre l'intrados du rail vertical. Le maintien se fait par des sangles, qui pressent la roue avant sur les deux rails empêchant ainsi tout mouvement vers l'arrière de la moto.

Un tel dispositif assure d'une part en raison de la symétrie de la section droite en forme de V de chaque rail, un positionnement latéral de la moto identique quelle que soit la largeur de son pneu avant et d'autre part en raison de l'action des sangles, le maintien de la roue avant sur les rails et simultanément une résistance mécanique à tout effort tendant à faire reculer la moto.

En revanche, il présente l'inconvénient de nécessiter deux personnes pour la mise en place de la moto, l'une fixant les sangles pendant que l'autre tient la moto. Il présente aussi l'inconvénient de ne pas enserrer la roue avant par trois points, formant un plan, mais par deux seulement: l'un au contact pneu/rail horizontal, l'autre au contact pneu/rail vertical. Ces deux points ne forment pas un plan mais une droite assimilable à une articulation. Pour cette raison le bridage de la roue avant, d'est à dire sa fixation au dispositif, est élastique.

On connaît aussi du document DE-U-88 01 618 un dispositif de blocage de roue de bicyclette confirme au préambule de la première revendication. Ce dispositif de blocage comprend und première partie fixe dans lequel est positionnée la roue à bloquer. A cette première partie est articulé un organe de levier en forme d'arceau auquel est articulé un deuxième arceau destiné à venir au contact du pneu de la roue selon une zone diamétralement opposée à la première partie. Par pivotement du levier, le deuxième arceau est amené en pression contre le pneu ce qui assure le blocage de la roue dans la première partie. Ce dispositif essentiellement manuel n'assure pas l'automatisation du bridage de la roue.

La présente invention a pour objet de remédier aux inconvénients précédemment cités. Dans ce but, elle a pour objet d'automatiser le bridage de la moto tout en l'optimisant, et à cet effet elle se rapporte à un dispositif de fixation de la roue avant de la moto comprenant au moins trois éléments prévus pour être en contact et en pression avec le pneumatique de la roue. Par ailleurs au moins deux de ces éléments sont prévus pour venir chacun de part et d'autre du pneumatique suivant l'épaisseur de ce dernier.
Préférentiellement les trois viennent chacun de part et d'autre du pneu. Ces éléments disposés à distance les uns des autres sur la circonférence du pneu viennent enserrer ce dernier, ce qui assure son immobilisation par coincement.
Grâce à cette caractéristique on obtient une fixation rigide puisque effectuée sur trois zones de contact écartées les unes des autres, non alignées, formant un plan.
Par ailleurs le dispositif outre la fixation de la roue avant assure un positionnement latéral de la moto indépendant du pneu et oppose un obstacle mécanique aux efforts de la moto vers l'avant au vers l'arrière.

Avantageusement les éléments d'immobilisation de la roue avant se développent chacun de manière évasée et de préférence symétriquement par rapport à un plan géométrique vertical, le pneu de la roue avant venant au contact de l'intrados de chacun de ces éléments.
Avec ce plan géométrique vertical commun à tous les éléments et fixe en position, vient se confondre le plan géométrique vertical de symétrie de la roue lorsque ladite roue est en position de blocage entre les dits éléments. Par plan géométrique vertical de symétrie de la roue, il faut entendre celui normal à l'axe de rotation de la roue. L'avantage d'une telle configuration réside dans le fait quelle quelque soit la largeur de son pneumatique, la roue, une fois engagée en blocage dans le dispositif, occupera par son plan vertical de symétrie, toujours la même position.
Selon une autre caractéristique de l'invention chaque élément présente une section droite en V. Chaque élément peut être formé par deux parois planes convergeant l'une vers l'autre (le pneu venant au contact du dièdre intrados formé), par un élément longiforme cintré à la manière d'un V ou bien par tout autre organe présentant un évasement adapté à recevoir le pneu. Cet évasement peut se présenter par exemple sous la forme d'une gorge formée dans un galet.

Selon la forme préférée de réalisation deux des trois éléments de blocage, préférentiellement deux éléments consécutif en considérant la circonférence de la roue, sont fixés rigidement à une même structure rigide constituée préférentiellement par deux bras parallèles espacés l'un de l'autre entre lesquels vient se disposer la roue lorsque cette dernière est positionnée sur les deux éléments de blocage. A titre d'exemple ces deux bras pourront se fixer à la partie la plus large de l'évasement que forme chaque élément de blocage ou bien sur l'extrados de chacun d'entre eux. Ces deux bras pourront se présenter sous la forme de paroi de section droite rectangulaire.
Les deux bras et les deux éléments de blocage forment un berceau destiné à recevoir la roue, la forme évasée des deux éléments de blocage assurant le positionnement précis de la roue dans le berceau.

Avantageusement selon une caractéristique additionnelle le berceau est monté pivotant autour d'un axe normal au plan vertical de symétrie commun aux trois éléments. Le berceau depuis une position d'attente et de réception de la roue avant de la moto, selon laquelle il est monté vers l'avant de la moto peut pivoter vers une position de blocage selon laquelle il porte la roue et est tourné vers le haut. Une foi que cette position est atteinte le troisième élément est appliqué fermement sur le pneumatique de la roue afin d'assurer le blocage de cette dernière.

Selon une autre caractéristique de l'invention lorsque le berceau est en position de repos ou d'attente de la roue avant de la moto l'élément recevant en premier la roue de la moto est au ras du sol ou au ras de la plate-forme qui porte le dispositif et son évasement est tourné vers le haut tandis que l'autre occupe une position élevée par rapport au sol ou par rapport à la plate-forme et son évasement est tourné à l'encontre du sens d'introduction de la roue de la moto dans le dispositif.

De tout ce qui précède il apparaît que le dispositif comprend une première partie 1, ou berceau basculant qui reçoit la roue avant de la moto par roulage de cette dernière, en deux zones de contact 10 11 avec le pneu, ces zones de contact étant formées par le premier et le deuxième élément de blocage que comporte le berceau basculant, l'arc de la circonférence du pneu délimité par ces deux zones de contact couvrant un angle inférieur à 180 degrés. Cette première partie peut recevoir la roue de la moto grâce à une position angulaire adéquate, dite position de réception : une de ses zones de contact 10 étant près du sol, l'autre 11 à l'opposé de l'endroit d'où vient la moto. Cette première partie bascule, entraînant la roue y étant engagée, jusqu'à la position angulaire, dite de verrouillage, nécessaire à la fonction assurée par une deuxième partie 2 venant en appui sur la roue par une zone de contact 12 constituée par le troisième élément de blocage et située à un endroit de la circonférence du pneu extérieur à l'arc inférieur à 180 degrés délimité par les deux zones de contact 10 11 de la première partie avec le pneu, l'appui de cette deuxième partie se faisant suite à au moins un mouvement relatif, selon un plan perpendiculaire à l'axe de la roue, entre la première et la deuxième partie.
Le dispositif comporte de plus une troisième partie 3, permettant un ou des mouvements relatifs entre les deux premières parties, selon un plan perpendiculaire à l'axe de la roue de la moto.

Ainsi, la roue de la moto est maintenue en blocage dans le dispositif par coincements et pincements, les coincements étant provoqués par les zones de contacts 10 11 12 et les pincements par les pressions exercées par les zones de contact 10 11 12, provoquées par l'appui de la deuxième partie sur le pneu et les efforts de reaction à cet appui ;

De plus le dispositif comprend un organe moteur 4 générateur d'une force au moins, nécessaire à la fonction de blocage précédemment évoquée, cet organe moteur étant connecté mécaniquement directement ou indirectement aux parties 1 et 2, provoquant à la commande le mouvement relatif de rapprochement des parties 1 et 2 l'une de l'autre et l'application par ces parties d'efforts de blocage sur le pneumatique de la roue.

La deuxième partie sera constituée par une structure porteuse tel un bras, s'étendant vers le haut et portant en extrémité supérieure le troisième élément de blocage formant la zone de contact 12.

D'autres avantages, buts et caractéristiques de l'invention apparaîtront à la lecture de formes préférées de réalisation données à titre d'exemple non limitatif en se référant aux dessins annexés en lesquels:
- la figure 1 est une vue d'une première forme de réalisation du dispositif en position réception de la roue,
- la figure 2 montre le même dispositif que celui représenté figure 1, mais en position verrouillage,
- la figure 3 est une coupe d'une des zones de contact 10 11 12,
- la figure 4 est une vue d'une deuxième forme de réalisation du dispositif en position réception de la roue,
- la figure 5 montre le même dispositif que celui représenté figure 4, mais en position verrouillage.

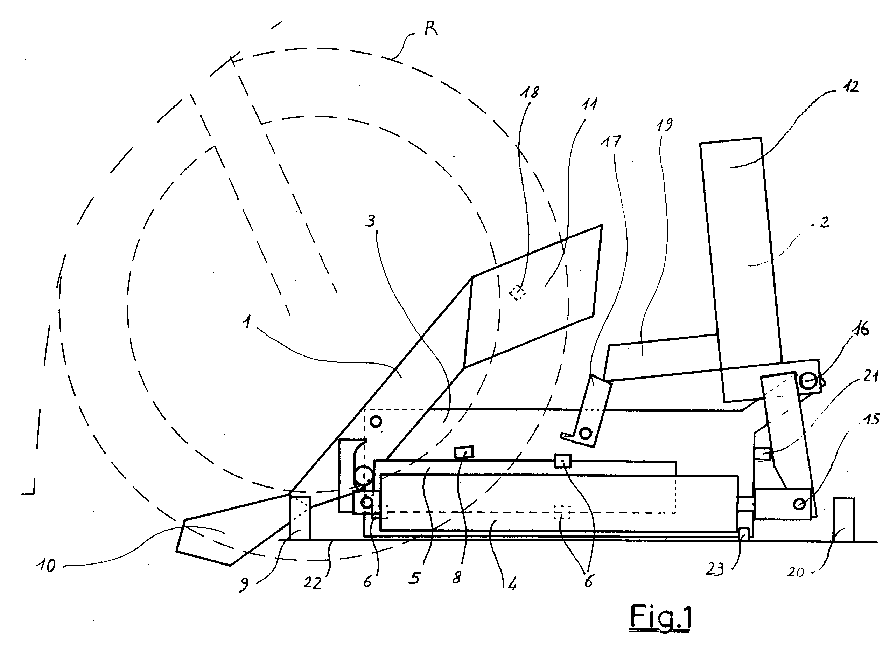

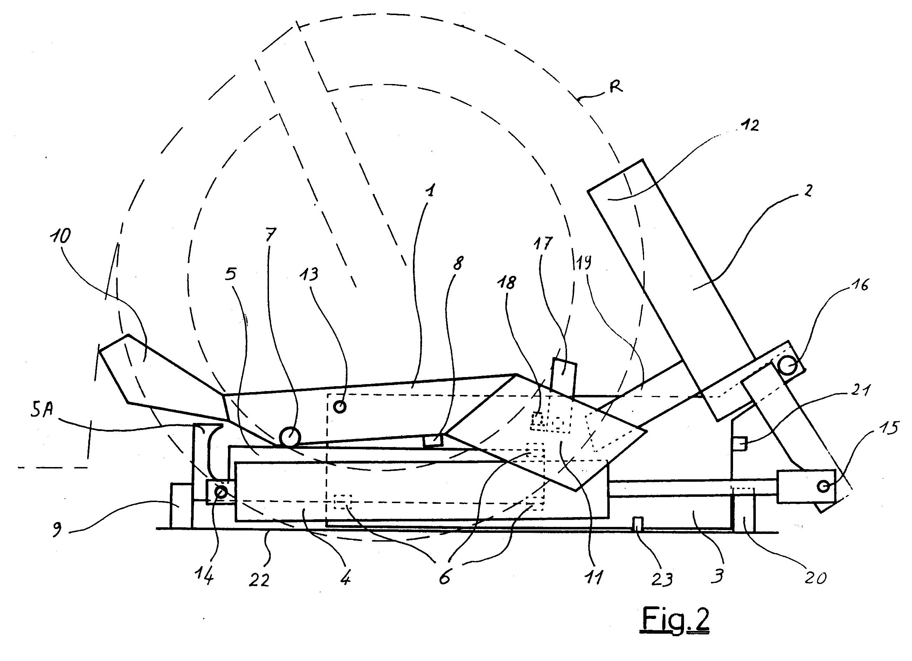

En se référant plus particulièrement aux figures 1 et 2 on va décrire une première forme de réalisation du dispositif selon l'invention. Par convention, on fixe l'avant vers la droite des figures, l'arrière vers la gauche des figures, soit vers la moto.

La première partie 1 et la deuxième partie 2, précédemment décrites, sont articulées respectivement par les axes 13 et 16 dans la troisième partie 3, ces axes 13 et 16 étant perpendiculaires au plan vertical de symétrie commun aux éléments de blocage. Ces axes sont donc parallèles à l'axe de rotation de la roue.
La deuxième partie est articulée à l'axe 16 par l'extrémité inférieure de son bras.

L'axe d'articulation 13 de la première partie 1 est placé en dessous de l'axe de roue de la moto, de sorte à ce que, au cours du basculement de la première partie, l'axe de la roue de la moto avance, entraînant cette dernière. Cette caractéristique n'est pas indispensable au fonctionnement du dispositif, mais le fait de pouvoir assister ainsi une avance longitudinale de la moto peut être un avantage dans le cas de l'utilisation du dispositif sur un banc à rouleau, la roue arrière de la moto pouvant ainsi monter sur le rouleau sans effort humain.

L'axe d'articulation 16 de la deuxième partie 2 est placé de façon à ce que le vecteur déplacement de la zone de contact 12 entre la deuxième partie et le pneu de la moto soit dirigé vers les zones de contact 10 et 11.

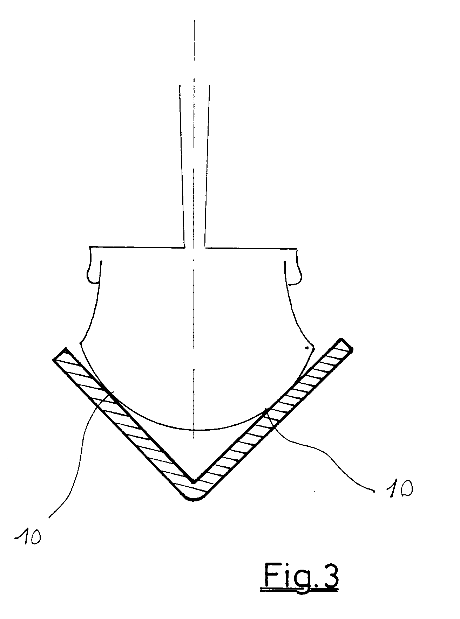

Les zones de contact 10 11 de la première partie avec le pneu de la roue et 12 de la deuxième partie avec le pneu de la roue sont chacune constituées de deux surfaces de contact convergentes disposées symétriquement de part et d'autre du plan de symétrie du pneu perpendiculaire à l'axe de rotation de la roue, et formant entre elles un angle inférieur à 180 degrés, de façon à coincer le pneu, en empêchant tout mouvement. Vues en coupe, elles forment un V destiné à coincer le pneu. Comme on peut le voir en figure 3 elles sont assimilables à l'intrados d'un dièdre.

La troisième partie 3 est constituée d'un simple châssis, et cette troisième partie se développe latéralement à la première partie ainsi qu'à la deuxième partie. Elle comporte les axes d'articulation 13 16 des première et deuxième parties, une butée 8 de la position verrouillage de la première partie, une butée 21 de dégagement maximal de la deuxième partie du pneu, un loquet 17 et son axe d'articulation. Dans le cas de l'utilisation du dispositif sur un banc à rouleau, le dispositif doit pouvoir coulisser, selon le plan longitudinal de la moto, afin de positionner la roue arrière correctement par rapport à l'axe du rouleau du banc. Cette liberté de mouvement se fait par le montage de la troisième partie sur des glissières parallèles au plan longitudinal de la moto et solidaires d'un socle 22 supportant l'ensemble du dispositif. Sur les figures, ces glissières ne sont pas représentées, pour plus de clarté. Une butée 20, solidaire du socle 22 et dont la position longitudinale est réglable, assure un arrêt du châssis 3 lors du coulissement de ce dernier vers l'avant comme exposé dans la description du fonctionnement.

Un loquet 17, articulé au châssis 3 suivant un axe perpendiculaire au plan vertical de symétrie commun aux trois éléments de blocage, retient, en position repos, la deuxième partie 2 dégagée de la roue de la moto, par l'intermédiaire d'un bras 19 solidaire de la deuxième partie.
Ce bras 19 comme on peut le voir s'étend perpendiculairement par rapport au bras de la deuxième partie. Par son extrémité libre ce bras 19 vient en appui sur l'extrémité supérieure du loquet 17. Le loquet 17 se développe vers le haut et est articulé par son extrémité inférieure au châssis 3.

Ce loquet 17 est rappelé vers sa position de repos du bras 19 par un organe élastique ou bien par un contre poids. Cette position de repos est matérialisée par une butée non représentée, fixée au chassis 3 et contre laquelle vient buter le loquet 17, ce qui limite le basculement de ce dernier vers l'avant. Le loquet 17 est doté d'un doigt saillant dirigé vers l'arrière du dispositif.
Lorsque la première partie arrive en position de verrouillage, un doigt 18, lui étant solidaire, fait basculer le loquet 17 vers l'arrière par appui sur le doigt saillant de ce dernier, dégageant ainsi le bras 19 solidaire de la partie 2, autorisant à celle ci un mouvement vers le pneu.
Il y a lieu de noter que le doigt 18 est fixé sur la face externe du berceau.
L'organe moteur 4 peut être constitué par un vérin double effet hydraulique ou pneumatique, par un vérin électrique ou par tout autre système permettant des mouvements linéaires ou rotatif. Préférentiellement l'organe moteur 4 est un vérin pneumatique double effet.

Le vérin à double effet 4 assure trois fonctions : basculement de la première partie, pivotement de la deuxième partie et enfin avancée du dispositif jusqu'à la butée 20 solidaire du socle 22. Cette butée 20 est réglable en position afin que la roue arrière de la moto soit disposée à l'endroit adéquat sur le rouleau du banc d'essai lorsque le dispositif est en appui contre ladite butée 20.

La tige de ce vérin est articulée par un axe 15 sur la deuxième partie, en dessous de l'axe d'articulation de celle ci, afin qu'un mouvement de la tige vers l'avant provoque une avancée de la zone de contact 12 de la deuxième partie vers le pneu. Le corps du vérin est solidaire, par un axe 14, d'une platine 5 montée coulissante dans le châssis 3 parallèlement au plan géométrique vertical de symétrie commun aux trois éléments de blocage. Le guidage de la platine 5 dans le châssis 3 est assuré par des glissières 6 lui laissant une liberté de mouvement longitudinal parallèle à celui du châssis 3 par rapport au banc à rouleau. Son extrémité arrière est prévue pour pouvoir prendre appui sur une butée 9 solidaire du socle 22. Le corps du vérin voit sa course vers l'avant limitée par la butée 23 solidaire du socle 22.

La platine 5, rectangulaire verticale, comporte en partie arrière une rainure verticale présentant une ouverture en extrémité supérieure destinée à recevoir un galet 7 solidaire de la première partie. Ce galet s'engage dans la rainure par passage au travers de l'ouverture que présente cette dernière. Le contact entre la platine 5 et la première partie 1 est assurée par ce galet 7 dont l'axe est solidaire de la première partie 1 et est situé à un niveau de hauteur inférieur par rapport à celui de l'axe 13. La platine comporte une partie droite, parallèle au mouvement longitudinal de la troisième partie par rapport au banc, destinée à permettre le déplacement de la platine 5 par rapport au galet 7, lorsque la première partie 1 est basculée en position de verrouillage, tout en maintenant cette première partie en position verrouillage.
Cette partie droite est constituée par le chant horizontal supérieur de la platine situé en avant de la rainure verticale.
En extrémité arrière, sur son chant horizontal supérieur la platine comporte une surélévation 5A laquelle est placée en arrière de l'ouverture de la rainure.
Cette surélévation 5A a pour but de forcer le galet 7 à s'engager dans la rainure lorsque la première partie revient dans sa position de réception telle que montrée en figure 1

Le fonctionnement, illustré par les figures 1, position de réception de la roue, et 2, position verrouillage, se fait comme ceci.

Le dispositif est en position réception (fig. 1). Le vérin 4 est maintenu en position rentrée par une pression d'air côté tige. Il maintient ainsi la première partie 1 en position de réception, par l'intermédiaire du galet 7 engagé à fond dans la rainure de la platine 5 solidaire du corps du vérin. Le vérin maintient aussi le dispositif entier en position maximale arrière, par l'intermédiaire de la deuxième partie, bloquée sur sa butée 21, que la tige du vérin tire vers l'arrière, le corps prenant appui sur la butée 23 solidaire du socle 22.

L'utilisateur fait rouler la moto jusqu'à ce que la roue avant soit engagée à fond dans la première partie 1. Il appuie sur la commande d'ouverture du vérin 4. La pression d'air est côté corps. La tige tend à sortir, entraînant la deuxième partie qui bute sur le loquet 17 par son bras 19. La tige étant bloquée vers l'avant, le corps du vérin se déplace vers l'arrière, entraînant la platine 5 qui coulisse dans le châssis 3 par les glissières 6.

Le galet 7, engagé dans la rainure usinée dans la platine 5, donc poussé par cette dernière vers l'arrière puis vers le haut, entraîne la première partie 1 dans un mouvement de rotation, de sens horaire sur la figure 1.

La première partie 1, en fin de rotation et avant d'arriver sur sa butée 8, provoque une rotation vers l'arrière du loquet 17 par l'action de son doigt 18 sur ce loquet. Ce mouvement du loquet 17 provoque le dégagement du bras 19, libérant ainsi la deuxième partie.

En fin de rotation de la première partie, le galet 7 se dégage de la rainure, pour rouler sur le chant horizontal supérieur de la platine 5, celle ci continuant son mouvement vers l'arrière. De ce fait, le galet 7 ne provoque plus de rotation de la première partie, mais la bloque en position verrouillage.

Le vérin entraîne toujours vers l'arrière la platine 5 qui vient buter sur la butée 9. La tige, continuant sa sortie, pousse alors vers l'avant le levier de la deuxième partie et provoque sa rotation en sens anti-horaire, sur les figures 1 et 2, cette deuxième partie étant libérée du loquet 17.

Lorsque la zone 12 de la deuxième partie arrive en contact avec le pneu, la rotation cesse, et la tige du vérin pousse l'ensemble du dispositif vers l'avant, le long de ses glissières non représentées, par l'intermédiaire de la deuxième partie en appui sur le pneu. Le galet roule sur la platine 5 solidaire du corps du vérin.

Le coulissement du dispositif arrive sur la butée 20. Le stoppage du dispositif, donc l'arrêt de la sortie du vérin, provoque une pression assurant à la zone de contact 12 de la deuxième partie un appui suffisant sur le pneu de la roue.

Le processus inverse permet le dégagement de la moto du dispositif, dans l'ordre des opérations suivant : ouverture de la deuxième partie 2, recul du dispositif vers la moto, puis basculement de la première partie de la position de verrouillage à la position de réception. Cet ordre se fait automatiquement, venant du fait de l'ordre croissant des efforts rencontrés. La butée 23 empêche le corps du vérin de se déplacer vers l'avant plus que nécessaire, ce qui serait l'effort moindre donc le premier mouvement du vérin.

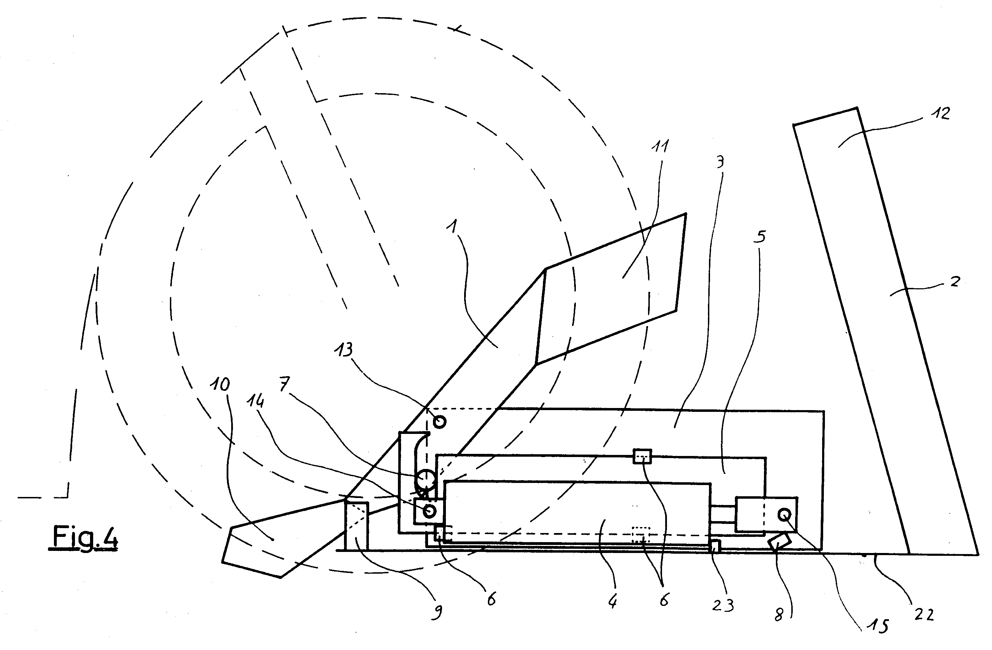

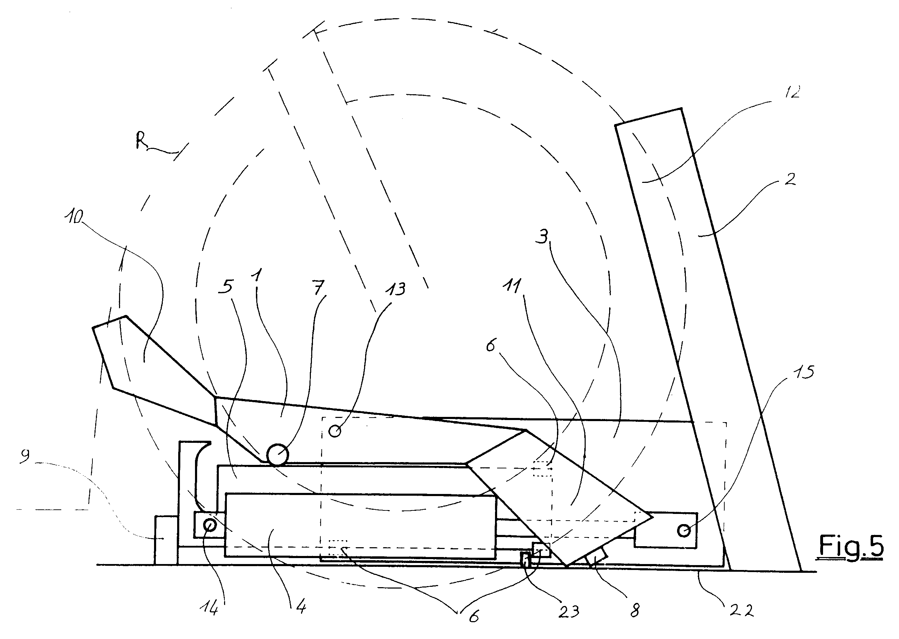

Une deuxième forme de l'invention diffère quelque peu de la première. Voir les figures 4 et 5.

Nous ne décrirons que les différences.

Sur cette forme, la deuxième partie 2 et la butée 20 ne forment qu'une seule pièce, à la position réglable longitudinalement par rapport au socle 22.

Selon cette forme de réalisation la seconde partie est toujours constituée par une structure porteuse, tel un bras, s'étendant vers le haut et portant en extrémité supérieure le troisième élément de blocage. Toujours selon cette forme de réalisation, le loquet 17, le doigt 18, le bras 19, l'axe 16 et la butée 21 n'existent plus.

La tige du vérin 4 est articulée sur le châssis 3 par l'axe 15.

Le châssis 3 ne maintient plus que la première partie, et est toujours monté sur le socle 22 par l'intermédiaire de glissières, non représentées.

Le fonctionnement diffère de celui précédemment décrit par les points suivants :

Lorsque le galet se dégage de la rainure de la platine 5, la première partie arrive en fin de rotation de verrouillage en sens horaire. La platine 5 arrive en butée sur la butée 9. La tige avance alors vers l'avant, entraînant les première et troisième parties vers l'avant. Lorsque le pneu, entraîné lui aussi puisque engagé dans la première partie, arrive en contact avec la deuxième partie solidaire du socle 22, l'allongement du vérin 4 cesse, ce qui provoque un appui suffisant de la deuxième partie sur le pneu de la roue de la moto.

Le dégagement de la roue se fait en ordre inverse.

Une autre forme de réalisation, non représentée, est une version simplifiée : le vérin, simple effet ici, est monté entre les deuxième et troisième partie, et n'a pour fonction que la rotation de la deuxième partie et son appui sur le pneu de la roue de la moto.

Les pièces 5 6 7 9 17 18 19 21 23 sont supprimées, la butée 20 étant à double sens de retenue, soit avant et arrière. La première partie est montée librement sur la troisième partie.

Le basculement de la première partie se fait en poussant la moto manuellement, l'axe de la roue étant situé au-dessus de l'axe 13.

Le vérin, mis alors sous pression, provoque la rotation de la deuxième partie vers le pneu, sens antihoraire, puis son appui sur le pneu.

L'ensemble du dispositif, toujours monté sur le socle 22 par des glissières, est positionné manuellement et verrouillé par la butée double sens 20.

Un banc d'essai à rouleau équipé de l'une des variantes de ce dispositif permet un contrôle de l'alignement des roues. La variante doit néanmoins posséder une particularité qui concerne les zones de contact 10 11 12 : les deux surfaces de contact composant chaque zone doivent être disposées symétriquement par rapport au plan de symétrie du pneu R perpendiculaire à l'axe de rotation de la roue. La bissectrice de l'angle entre les deux surfaces de contact constituant chacune des zones 10 11 12 doit appartenir au plan de symétrie du pneu R perpendiculaire à l'axe de rotation de la roue avant de la moto engagée dans le dispositif.

Ce banc comporte un rouleau dont l'axe de est parallèle à l'axe de rotation de la roue avant R. Sur ce rouleau tourne la roue arrière de la moto, la roue avant étant engagée dans le dispositif de fixation objet de la présente invention par les zones de contact 10 11 12. Le rouleau comporte au moins un repère constitué par une rainure circonférentielle. Cette disposition permet de mettre en évidence un désalignement entre les roues avant et arrière de la moto par examen du décalage latéral éventuel entre la rainure et le plan de symétrie vertical de la roue arrière, par ce plan il faut entendre celui normal à l'axe de rotation de la dite roue. Préférentiellement la rainure se développe suivant le plan géométrique vertical de symétrie commun des trois éléments de blocage. En variante seront prévues deux rainures suffisamment rapprochées pour être en contact avec le pneu et disposées de manière symétrique de part et d'autre de ce plan.

Cette invention, aussi réalisable sous d'autres variantes que celles décrites ici, est principalement destinée à la fixation des motos sur des bancs d'essai de puissance à rouleau, ainsi qu'au contrôle de l'alignement des roues pour la réalisation particulière évoquée ci-dessus.

## Revendications

1. Dispositif de fixation d'une moto sur un socle (22), par une roue (R) de celle ci équipée de son pneu, comportant:
- une première partie (1) assurant le maintien de la roue (R) par deux zones (10) (11) de contact avec le pneu de la roue, l'arc de la circonférence du pneu délimité par ces deux zones (10) (11) de contact couvrant un angle inférieur à 180 degrés,
- une deuxième partie (2) pouvant appuyer sur la roue (R) de la moto, appui transmis par une zone de contact (12) entre la deuxième partie (2) et le pneu de la roue, zone (12) située à un endroit de la circonférence du pneu extérieur à l'arc inférieur à 180 degrés délimite par les deux zones de contact (10) (11) de la première partie avec le pneu, la direction de la force d'appui de la zone de contact (12) de la deuxième partie (2) sur le pneu étant sensiblement dirigée vers les zones de contact (10) ou (11) de la première partie sur le pneu, l'appui de cette deuxième partie (2) sur le pneu étant réalisé suite à au moins un mouvement relatif entre les deux premières parties (1) (2), selon un plan perpendiculaire à l'axe de la roue (R) de la moto ;
- une troisième partie (3) permettant un ou des mouvements relatifs entre les première (1) et deuxième parties (2), selon un plan perpendiculaire à l'axe de la roue (R) de la moto caractérisé en ce que la première partie est mobile d'une position adéquate à la réception de la roue à une position de verrouillage, adéquate à la fonction d'appui assurée par la deuxième partie (2), selon un plan perpendiculaire à l'axe de la roue (R) de la moto et qu'il est doté d'un organe générateur (4) d'une force au moins, nécessaire(s) au(x) mouvement(s) relatif(s) entre les première (1) et deuxième parties (2) et à la fonction d'appui de la deuxième partie (2) sur le pneu de la roue.

2. Dispositif selon la revendication 1 caractérisé en ce que les zones de contact (10) (11) (12) sont chacune constituées de deux surfaces de contact disposées de part et d'autre du plan de symétrie du pneu perpendiculaire à l'axe de rotation de la roue (R) et formant entre elles un angle inférieur 180 degrés.

3. Dispositif selon les revendications 1 et 2, caractérisé en ce que la première partie (1) est montée oscillante dans la troisième partie (3) par un axe (13), la deuxième partie (2) est montée oscillante dans la troisième partie (3) par un axe (16) situé en dessous de la zone de contact (12) entre la deuxième partie et le pneu, la troisième partie (3) est montée coulissante sur le socle (22), l'axe de coulissement étant confondu avec le plan longitudinal de la moto, une butée réglable (20) solidaire du socle (22) limitant le déplacement longitudinal de la troisième partie sur le socle (22).

4. Dispositif selon les revendications 1 et 3 caractérisé en ce que l'axe (13) est situé en dessous de l'axe de la roue de la moto, un vérin est monté entre les deuxième (2) et troisième parties (3), l'axe d'articulation (15) entre le vérin et la deuxième partie étant sous l'axe (16) d'articulation de cette deuxième partie (2) sur la troisième partie (3), de sorte qu'un allongement du vérin provoque la rotation de la deuxième partie de la position repos à la position d'appui sur le pneu.

5. Dispositif selon les revendications 1 et 3 caractérisé en ce que un vérin (4) est articulé d'un côté par un axe (15) sur la deuxième partie (2), l'axe (15) étant placé sous l'axe (16) d'articulation de la deuxième partie (2) sur la troisième partie (3), et de l'autre côté par un axe (14) à une platine (5) montée coulissante par des glissières (6) sur la troisième partie (3), l'axe de coulissement de la platine (5) étant parallèle à l'axe de coulissement de la troisième partie (3) sur le socle (22) et le coulissement de la platine (5) étant limité par une butée (9) solidaire du socle (22), en ce que un galet (7) solidaire de la première partie (1) articulée par un axe (13) sur la troisième partie (3) est engagé dans une rainure pratiquée dans la platine (5) lorsque la première partie (1) est en position de réception de la roue et est dégagé de cette rainure lorsque la première partie (1) est en position verrouillage, l'empêchant ainsi de quitter cette position verrouillage par le contact avec une partie droite de la platine (5), partie droite laissant une possibilité de déplacement du galet (7) sur la platine (5), en cas de mouvement relatif entre cette platine (5) et la première partie (1), en ce que un loquet (17), monté articulé dans la troisième partie (3) empêche, en position repos et par contact avec le bras (19) solidaire de la deuxième partie (2), la rotation induite à la deuxième partie (2) par la force du vérin (4) sur cette deuxième partie (2), en ce que un doigt (18), solidaire de la première partie (1), libère le bras (19) du loquet (17) lorsque la première partie arrive en position de verrouillage, ce doigt (18) faisant pour cela pivoter le loquet (17) autour de son axe, en ce que une butée réglable (20) est solidaire du socle (22).

6. Dispositif selon la revendication 1 caractérisé en ce que la première partie (1) est montée oscillante dans la troisième partie (3) par un axe (13), la deuxième partie (2) est montée sur le socle (22), la troisième partie (3) est montée coulissante sur le socle (22), l'axe de coulissement étant confondu avec le plan longitudinal de la moto, un vérin (4) est articulé d'un côté par un axe (15) sur la troisième partie (3), et de l'autre côté par un axe (14) à une platine (5) montée coulissante par des glissières (6) sur la troisième partie (3), l'axe de coulissement de la platine (5) étant parallèle à l'axe de coulissement de la troisième partie (3) sur le socle (22) et le coulissement de la platine (5) étant limité par une butée (9) solidaire du socle (22), en ce que un galet (7) solidaire de la première partie (1) articulée par un axe (13) sur la troisième partie (3) est engagé dans une rainure pratiquée dans la platine (5) lorsque la première partie (1) est en position de réception de la roue et est dégagé de cette rainure lorsque la première partie (1) est en position verrouillage, l'empêchant ainsi de quitter cette position verrouillage par le contact avec une partie droite de la platine (5), partie droite laissant une possibilité de déplacement du galet (7) sur la platine (5), en cas de mouvement relatif entre cette platine (5) et la première partie (1).

7. Dispositif selon les revendications 1, 3 à 6 caractérisé en ce que les mouvements et effort sont assurés par des vérins pneumatiques, hydrauliques, électriques ou tout système permettant des mouvements linéaires ou rotatifs.

8. Dispositif selon la revendication 2 caractérisé en ce que la bissectrice de l'angle entre les deux surfaces de contact constituant chacune des zones (10) (11) (12) appartient au plan de symétrie du pneu (R) perpendiculaire à l'axe de rotation de la roue avant de la moto engagée dans le dispositif.

9. Banc d'essai caractérisé en ce qu'il comporte un dispositif selon l'une quelconque des revendications 1 à 8.

10. Banc selon la revendication 9 caractérisé par un rouleau sur lequel tourne la roue arrière de la moto, rouleau dont l'axe est parallèle à l'axe de rotation de la roue (R) avant de la moto engagée dans les zones de contact (10) (11) (12), rouleau comportant un repérage sur sa circonférence, se développant suivant le plan vertical de symétrie commun aux zones de contact (10), (11) et (12).

## Claims

1. Device for fixing a motorbike on a stand (22), by one wheel (R) of said motorbike, complete with its tyre, comprising:
- a first portion (1), which holds the wheel (R) by two zones (10) (11) in contact with the tyre of the wheel, the arc of the circumference of the tyre delimited by these two contact zones (10) (11) covering an angle of less than 180 degrees,
- a second portion (2) capable of bearing against the wheel (R) of the motorbike, which bearing force is transmitted by a zone (12) of contact between the second portion (2) and the tyre of the wheel, which zone (12) is located at a place on the circumference of the tyre outside the arc of less than 180 degrees delimited by the two zones (10) (11) of the first portion in contact with the tyre, the direction of the bearing force of the contact zone (12) of the second portion (2) on the tyre being substantially directed towards the contact zones (10) or (11) of the first portion on the tyre, the bearing of this second portion (2) against the tyre being produced following at least one relative movement between the first two portions (1) (2), in a plane perpendicular to the axis of the wheel (R) of the motorbike;
- a third portion (3) allowing one or more relative movements between the first (1) and second (2) portions, in a plane perpendicular to the axis of the wheel (R) of the motorbike characterised in that the first portion is movable from a position suitable for receiving the wheel to a locking position, suitable for the bearing function provided by the second portion (2), in a plane perpendicular to the axis of the wheel (R) of the motorbike and in that it is provided with a member (4) generating at least one force, necessary for the relative movement(s) between the first (1) and second (2) portions and for the bearing function of the second portion (2) on the tyre of the wheel.

2. Device according to Claim 1 characterised in that the contact zones (10) (11) (12) are each constituted by two contact surfaces arranged on either side of the plane of symmetry of the tyre perpendicular to the axis of rotation of the wheel (R) and forming between them an angle of less than 180 degrees.

3. Device according to Claims 1 and 2, characterised in that the first portion (1) is mounted so as to oscillate inside the third portion (3) via an axis (13), the second portion (2) is mounted so as to oscillate inside the third portion (3) via an axis (16) located below the zone (12) of contact between the second portion and the tyre, the third portion (3) is mounted so as to slide over the stand (22), the axis of sliding being indistinguishable from the longitudinal plane of the motorbike, an adjustable stop (20) integral with the stand (22) limiting the longitudinal displacement of the third portion over the pedestal (22).

4. Device according to claims 1 and 3 characterised in that the axis (13) is located below the axis of the motorbike wheel, a jack is mounted between the second (2) and third (3) portions, the axis of articulation (15) between the jack and the second portion being below the axis (16) of articulation of this second portion (2) on the third portion (3), such that an elongation of the jack causes the second portion to rotate from the rest position to the position of bearing against the tyre.

5. Device according to Claims 1 and 3, characterised in that a jack (4) is articulated on one side by an axis (15) on the second portion (2), the axis (15) being placed below the axis (16) of articulation of the second portion (2) on the third portion (3), and on the other side by an axis (14) to a plate (5) mounted so as to slide via runners (6) over the third portion (3), the axis of sliding of the plate (5) being parallel to the axis of sliding of the third portion (3) over the stand (22) and the sliding of the plate (5) being limited by a stop (9) integral with the pedestal (22), in that a roller (7) integral with the first portion (1) articulated via an axis (13) on the third portion (3) is engaged in a groove made in the plate (5) when the first portion (1) is in a position for receiving the wheel and is released from this groove when the first portion (1) is in a locking position, thus preventing it from leaving this locking position by contact with the straight portion of the plate (5), which straight portion admits a possibility of displacement of the roller (7) over the plate (5), in the event of relative movement between this plate (5) and the first portion (1), in that when a catch (17), mounted so as to be articulated in the third portion (3), is in the rest position and by contact with the arm (19) integral with the second portion (2), it prevents the rotation caused to the second portion (2) by the force of the jack (4) on this second portion (2), in that a pin (18), integral with the first portion (1), releases the arm (19) from the catch (17) when the first portion reaches the locking position, this pin (18) thereby causing the catch (17) to pivot about its axis, in that an adjustable stop (20) is integral with the stand (22).

6. Device according to Claim 1 characterised in that the first portion (1) is mounted so as to oscillate inside the third portion (3) by an axis (13), the second portion (2) is mounted on the stand (22), the third portion (3) is mounted so as to slide over the stand (22), the axis of sliding being indistinguishable from the longitudinal plane of the motorbike, a jack (4) is articulated on one side by an axis (15) on the third portion (3) and on the other side by an axis (14) to a plate (5) mounted so as to slide via runners (6) over the third portion (3), the axis of sliding of the plate (5) being parallel to the axis of sliding of the third portion (3) over the stand (22) and the sliding of the plate (5) being limited by a stop (9) integral with the stand (22), in that a roller (7) integral with the first portion (1) articulated by an axis (13) on the third portion (3) is engaged in a groove made in the plate (5) when the first portion (1) is in the position for receiving the wheel and is released from this groove when the first portion (1) is in a locking position, thus preventing it from leaving this locking position by contact with a straight portion of the plate (5), which straight portion admits a possibility of displacement of the roller (7) over the plate (5), in the event of relative movement between this plate (5) and the first portion (1).

7. Device according to Claims 1, 3 to 6 characterised in that the movements and effort are provided by pneumatic, hydraulic or electric jacks or by any system permitting linear or rotary movement.

8. Device according to Claim 2 characterised in that the bisector of the angle between the two contact surfaces each constituting zones (10) (11) (12) belongs to the plane of symmetry of the tyre (R) perpendicular to the axis of rotation of the front wheel of the motorbike engaged in the device.

9. Test bench characterised in that it comprises a device according to any one of Claims 1 to 8.

10. Bench according to Claim 9 characterised by a roller on which the rear wheel of the motorbike turns, the axis of which roller is parallel to the axis of rotation of the front wheel (R) of the motorbike engaged in the contact zones (10) (11) (12), which roller comprises a marker on its circumference, being developed in the vertical plane of symmetry common to the contact zones (10), (11) and (12).

## Patentansprüche

1. Vorrichtung zur Befestigung eines Motorrades auf einem Sockel (22) mittels eines mit seinem Reifen ausgerüsteten Rades (R) des Motorrades mit folgenden Teilen:
- einem ersten Teil (1), der das Rad (R) durch zwei Kontaktzonen (10,11) hält, welche den Reifen des Rades berühren, wobei der durch diese zwei Kontaktzonen (10, 11) begrenzte Umfangsbogen des Reifens einen Winkel von weniger als 180° überdeckt,
- einen zweiten Teil (2), der gegen das Rad (R) des Motorrades andrückbar ist, wobei der Druck durch eine zwischen dem zweiten Teil (2) und dem Reifen des Rades liegende Kontaktzone (12) übertragen wird, die in einem Bereich des Reifenumfangs außerhalb des von den zwei Kontaktzonen (10,11) des ersten Teils mit dem Reifen begrenzten Bogens von weniger als 180° liegt, und die Richtung der Druckkraft der Kontaktzone (12) des zweiten Teils (2) auf den Reifen im wesentlichen in Richtung auf die Reifenkontaktzonen (10) oder (11) des ersten Teils gerichtet ist und der Druck dieses zweiten Teils (2) auf den Reifen infolge von mindestens einer Relativbewegung zwischen den zwei ersten Teilen (1 ) und (2) gemäß einer zur Achse des Rades (R) des Motorrades senkrechten Ebene erzeugt wird;
- einem dritten Teil (3), der eine Relativbewegung oder Relativbewegungen zwischen dem ersten Teil (1) und dem zweiten Teil (2) gemäß einer zur Achse des Rades (R) des Motorrades senkrechten Ebene ermöglicht, **dadurch gekennzeichnet, daß** der erste Teil von einer zur Aufnahme des Rades geeigneten Stellung in eine für die vom zweiten Teil (2) gewährleistete Andruckfunktion geeignete Verriegelungsstellung gemäß einer zur Achse des Rades (R) des Motorrades senkrechten Ebene beweglich ist und daß er mit einem Element (4) zur Erzeugung mindestens einer Kraft ausgerüstet ist, die für die Relativbewegung oder Relativbewegungen zwischen dem ersten Teil (1) und zweiten Teil (2) und für die Funktion des Andrücken des zweiten Teils (2) gegen den Reifen des Rades erforderlich ist bzw. sind.

2. Vorrichtung nach Anspruch 1, **dadurch gekennzeichnet, daß** die Kontaktzonen (10, 11, 12) je von zwei Kontaktflächen gebildet sind, die beiderseits der zur Drehachse des Rades (R) senkrechten Symmetrieebene des Reifens angeordnet sind und miteinander einen Winkel von weniger als 180° bilden.

3. Vorrichtung nach den Ansprüchen 1 und 2, **dadurch gekennzeichnet, daß** der erste Teil (1) im dritten Teil (3) durch eine Achse (13) schwenkbar montiert ist, der zweite Teil (2) im dritten Teil (3) durch eine Achse (16), die unterhalb der Kontaktzone (12) zwischen dem zweiten Teil und dem Reifen liegt, schwenkbar montiert ist, der dritte Teil (3) am Sockel (22) verschiebbar montiert ist, wobei die Verschiebungsachse mit der Längsebene des Motorrades zusammenfällt und ein mit dem Sockel (22) fest verbundener regelbarer Anschlag (20) die Längsverschiebung des dritten Teils auf dem Sockel (22) begrenzt.

4. Vorrichtung nach den Ansprüchen 1 und 3, **dadurch gekennzeichnet, daß** die Achse (13) unterhalb der Achse des Rades des Motorrades angeordnet ist, ein Arbeitszylinder zwischen dem zweiten Teil (2) und dritten Teil (3) montiert ist, die Gelenkachse (15) zwischen dem Arbeitszylinder und dem zweiten Teil unterhalb der Gelenkachse (16) dieses zweiten Teils (2) auf dem dritten Teil (3) angeordnet ist, so daß eine Verlängerung des Arbeitszylinders die Drehung des zweiten Teils aus der Ruhestellung in die Andruckstellung auf den Reifen bewirkt.

5. Vorrichtung nach den Ansprüchen 1 und 3, **dadurch gekennzeichnet, daß** ein Arbeitszylinder (4) an einer Seite durch eine Achse (15) am zweiten Teil (2) angelenkt ist, wobei die Achse (15) unter der Gelenkachse (16) des zweiten Teils (2) am dritten Teil (3) angeordnet ist und der Arbeitszylinder auf der anderen Seite durch eine Achse (14) mit einer mittels Gleitschienen (6) am dritten Teil (3) verschiebbar montierten Platine (5) angelenkt ist, wobei die Verschiebungsachse der Platine (5) parallel zur Verschiebungsachse des dritten Teils (3) auf dem Sockel (22) ist und die Verschiebung der Platine (5) durch eine mit dem Sockel (22) fest verbundenen Anschlag (9) begrenzt ist, wobei ferner eine Rolle (7), die fest mit dem ersten Teil (1) verbunden ist, der durch eine Achse (13) am dritten Teil (3) angelenkt ist, in eine in der Platine (5) ausgebildete Rinne eingreift, wenn der erste Teil (1) in einer Stellung zur Aufnahme des Rades ist, und von dieser Rinne frei ist, wenn der erste Teil (1) in Verriegelungsstellung ist, und ihn so daran hindert, die Verriegelungsstellung zu verlassen, indem sie einen geraden Teil der Platine (5) berührt, der der Rolle (7) die Möglichkeit einer Verschiebung auf der Platine (5) im Fall einer Relativbewegung zwischen dieser Platine (5) und dem ersten Teil (1) beläßt, wobei ferner eine im dritten Teil (3) angelenkte Falle (17) in Ruhestellung und in Berührung mit dem fest mit dem zweiten Teil (2) verbundenen Arm (19) verhindert, daß die durch die Kraft des Arbeitszylinders (4) auf diesen zweiten Teil (2) ausgeübte Kraft zu einer Drehung des zweiten Teils (2) führt, und wobei ein mit dem ersten Teil (1) fest verbundener Finger (18) den Arm (19) der Falle (17) freigibt, wenn der erste Teil in die Verriegelungsstellung gelangt, wobei dieser Finger (18) zu diesem Zweck die Falle (17) um ihre Achse schwenkt und wobei ein mit dem Sockel (22) fest verbundener regelbarer Anschlag (20) vorgesehen ist.

6. Vorrichtung nach Anspruch 1, **dadurch gekennzeichnet, daß** der erste Teil (1) im dritten Teil (3) durch eine Achse (13) schwenkbar gehalten ist, der zweite Teil (2) am Sockel (22) montiert ist, der dritte Teil (3) am Sockel (22) verschiebbar gehalten ist, die Verschiebungsachse mit der Längsebene des Motorrads zusammenfällt, ein Arbeitszylinder (4) an seiner einen Seite durch eine Achse (15) am dritten Teil (3) und an der anderen Seite durch eine Achse (14) an einer Platine (5) angelenkt ist, die durch Gleitschienen (6) auf dem dritten Teil (3) verschiebbar gehalten ist, wobei die Verschiebungsachse der Platine (5) parallel zur Verschiebung des dritten Teils (3) am Sockel (22) ist und die Verschiebung der Platine (5) durch einen mit dem Sockel (22) fest verbundenen Anschlag (9) begrenzt ist, wobei ferner eine Rolle (7), die fest mit dem ersten Teil (1) verbunden ist, durch eine Achse (13) am dritten Teil (3) angelenkt ist und in eine in der Platine (5) ausgebildete Rinne eingreift, wenn der erste Teil (1) sich in der Aufnahmestellung für das Rad befindet und von dieser Rinne frei ist, wenn sich der erste Teil (1) in der Verriegelungsstellung befindet, wobei die Rolle durch die Berührung mit einem geraden Teil der Platine (5) verhindert, daß der erste Teil (1) aus seiner Verriegelungsstellung gelangt und der gerade Teil der Platine eine Verschiebung der Rolle (7) auf der Platine (5) im Fall einer Relativbewegung zwischen dieser Platine (5) und dem ersten Teil (1) zuläßt.

7. Vorrichtung nach den Ansprüchen 1, 3 bis 6, **dadurch gekennzeichnet, daß** die Bewegungen und Kräfte durch pneumatische, hydraulische, elektrische Arbeitszylinder oder durch jedes System, das lineare oder Drehbewegungen ermöglicht, bewirkt werden.

8. Vorrichtung nach Anspruch 2, **dadurch gekennzeichnet, daß** die Winkelhalbierende des Winkels zwischen den zwei Kontaktflächen, die jeweils die Zonen (10), (11), (12) bilden, in der zur Drehachse des Vorderrades senkrechten Symmetrieebene des Reifens (R) des in die Vorrichtung eingesetzten Motorrades liegt.

9. Leistungsprüfstand, **dadurch gekennzeichnet, daß** er eine Vorrichtung nach einem der Ansprüche 1 bis 8 aufweist.

10. Leistungsprüfstand nach Anspruch 9, **gekennzeichnet durch** eine Rolle, auf der sich das Hinterrad des Motorrades dreht und deren Achse parallel zur Drehachse des in die Kontaktzonen (10), (11), (12) eingesetzten Vorderrades (R) des Motorrades ist, wobei die Rolle an ihrem Umfang eine Markierung trägt, die sich in der den Kontaktzonen (10), (11) und (12) gemeinsamen vertikalen Symmetrieebene entwickelt.
